# EUROPEAN PATENT APPLICATION

(11) **EP 2 907 609 A2**
(43) Date of publication of application: **19.08.2015**
(21) Application number: 15151565.7
(22) Date of filing: 19.01.2015
(51) Int. Cl.: B23D 45/12

(54) **Apparatus for manipulating tubular and round section objects**

(30) Priority: 22.01.2014 FI 20145061
(71) Applicant: Exact Tools Oy, 00210 Helsinki (FI)
(72) Inventor: Makkonen, Seppo, 00250 Helsinki (FI); Priha, Mika, 00180 Helsinki (FI)
(74) Representative: Berggren Oy Ab

(57) **Abstract**

An apparatus (100) for cutting workpieces (1) adapted to engage the workpiece (1) in at least four points of surface engagement. The apparatus (100) has a clamping mechanism (2) designed to be fastened to the workpiece (1). The clamping mechanism (2) has a tool unit (3) attached which includes adjustment means (4) for displacing the tool unit (3) relative to the clamping mechanism (2) towards or away from the workpiece (1). The clamping mechanism (2) has a frame element (5) and arms (6, 7, 24, 25) extending from the clamping mechanism (2). Each of the four arms (6, 7, 24, 25) includes a bearing wheel (15, 16, 35, 36). Each of the wheels (15, 16, 35, 36) may be used to engage a workpiece (1) to retain its position while it is being cut.

## Description

### TECHNICAL FIELD OF THE INVENTION

The invention relates to an apparatus for manipulating, such as machining and especially cutting tubular and round-bar type objects.

### BACKGROUND OF THE INVENTION

A variety of tools are known from the prior art for machining, such as for cutting a tubular or round-bar type piece. One exemplary tool of the prior art is an apparatus comprising a clamping mechanism adapted to be fastened to the workpiece rotatably there around. The clamping mechanism has attached thereto a tool unit, which is provided with adjustment means for displacing said tool unit relative to the clamping mechanism towards or away from the workpiece. The clamping mechanism included a frame element and first and second arms extending therefrom, the arms being articulated at one end to the frame element of the clamping mechanism and each arm has its free end fitted with a bearing axle, which is provided with at least one bearing wheel. The clamping mechanism has its frame element provided in a rotatable and axially immobile fashion with a threaded shaft, whose first end has a right-handed thread provided with a first nut and whose second end has a left-handed thread provided with a second nut. The threaded shaft is provided with a member for rotating the threaded shaft, and the first arm and the first nut are articulated to each other by means of a first suspension arm and the second arm and the second nut are articulated to each other by means of a second suspension arm.

This apparatus has functioned excellently. However the user must concentrate to the machining operation very carefully and press the apparatus against the object during the operation. This is especially the case when machining, such as cutting the workpiece in a certain direction, for example cutting it perpendicularly. This might be in some situations cumbersome and causes danger.

### SUMMARY OF THE INVENTION

An object of the invention is to alleviate and eliminate the problems relating to the known prior art. Especially the object of the invention is to provide an apparatus, which can be used more easily and more safety.

The object of the invention can be achieved by the features of independent claims.

The invention relates to an apparatus according to claim 1.

According to an embodiment of the invention the apparatus comprises a locking member which allows the apparatus to be locked in the manipulating position in a releasable manner. This makes the manipulating operation much easier, because the user has not to press the apparatus against the workpiece during the machining process. The locking from the machining position can be easily released when needed.

The apparatus further comprises two second bearing axles, fitted either fixed manner or adjustably relative to their mutual distance between the arms and the frame element, each of said axles being provided with at least one bearing wheel. By virtue of its adjustability, the apparatus can be fastened around a pipe to be cut in an optimal fashion regardless of the size of the pipe.

In a particularly preferred arrangement, the working force produced by a blade of the tool unit applies to the workpiece a force, in response to which the workpiece presses against the bearing wheels mounted on said second bearing axles. Consequently, the overall flexures remain as insignificant as possible.

In an arrangement preferred with regard to simple operation of the apparatus, said second bearing axles are adapted to be adjusted by means of the threaded shaft concurrently with the bearing axles present at the ends of the arms.

Preferably, each of said second bearing axles is connected to one of the nuts of the threaded shaft. Alternatively, each of said second bearing axles is connected to one of the arms.

In one particularly preferred embodiment of the invention, the arrangement is such that at least one of the bearing wheels of the bearing axles is adapted to rotate in one direction only. This arrangement enables preventing a relative rotation of the tool unit and/or the pipe in a wrong direction, which would result in exceptional working forces that could develop flexures, which in turn would have an adverse effect on the resulting cut surface.

According to an embodiment the apparatus is provided also with a lateral adjusting means for adjusting the tool unit in a lateral direction, which is perpendicular in relative to the displacing movement happening towards or away from the workpiece. Accordingly also alignment or track of any saw or blade or other manipulating device of the tool unit is adjusted in a lateral direction in relation to the workpiece, such as a pipe, at the same when the too unit is adjusted. This allows adjusting the travelling direction of the tool unit, as well as especially the track of the manipulating device along the workpiece to be manipulated. One example is a track of sawing, when the pipe is sawed.

This offers additionally a great advantage, namely by the lateral adjustment for example the blade can be aligned originally with a certain angle in relation to direct seam, whereupon the lateral forces and wrenching induced by the cutting can be compensated and thereby the direct cutting can be easily achieved.

The tool unit comprises preferably a circular saw, a bandsaw, or a piercing saw. Also a bevelling saw for machining a bevel with a certain angle, e.g. 30° angle, at the end of the pipe can be used. Additionally the rotation speed of the tool unit is advantageously adjustable depending e.g. on material of the workpiece in question, whereupon the tool unit, saw or blade can be saved for damages. It is to be noted that the tool unit is not limited to those examples only but may also comprise other types of saws or machining means.

The present invention offers advantages over the known prior art, such as it simplifies and facilitates the manipulating procedure. The user does not need to focus to press the apparatus, such as keeping the blade as pressed during the operation due to locking, but he can concentrate to feeding process, such as feeding velocity, which is a clear advantage. In addition the invention minimizes also the risks related to concentration of two different tasks, such as pressing and feeding operations. When the user can concentrate to the feeding velocity and feeding force, it is very advantage for the blade life time, since the smoother the feeding velocity and feeding force, the longer the life time of the blade. Furthermore embodiments of the invention allows also the operation of the apparatus and locking operations with one hand, whereupon the user is free to use the other hand for other possible tasks.

### BRIEF DESCRIPTION OF THE DRAWINGS

Next the invention will be described in greater detail with reference to exemplary embodiments in accordance with the accompanying drawings, in which:
- Figures 1A-1C: illustrate an example of an apparatus according to an advantageous embodiment of the invention,
- Figures 2A-2B: illustrate an example of an apparatus according to an advantageous embodiment of the invention,
- Figures 3A-3B: illustrate examples of means for adjusting a machining track of an apparatus according to an advantageous embodiment of the invention,
- Figures 4A1-4F2: illustrate examples of a locking means of an apparatus according to an advantageous embodiment of the invention,
- Figures 5A-5B: illustrate examples of a sawdust managing means of an apparatus according to an advantageous embodiment of the invention,
- Figures 6A-6B: illustrate an example of a protection cover for a blade of an apparatus according to an advantageous embodiment of the invention, and
- Figures 7A-7C: illustrate an example adjusting means for laterally adjusting the apparatus according to an advantageous embodiment of the invention.

### DETAILED DESCRIPTION

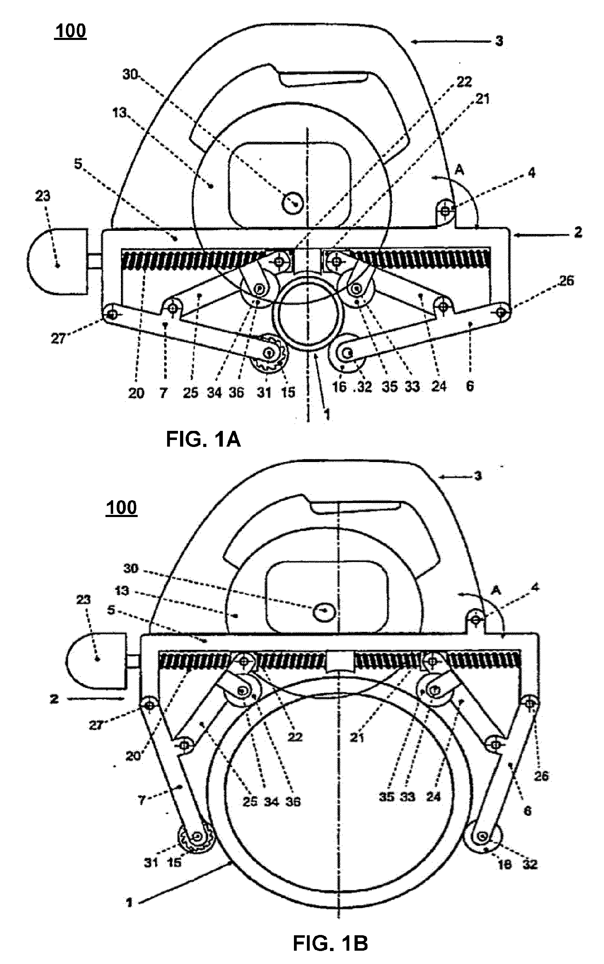

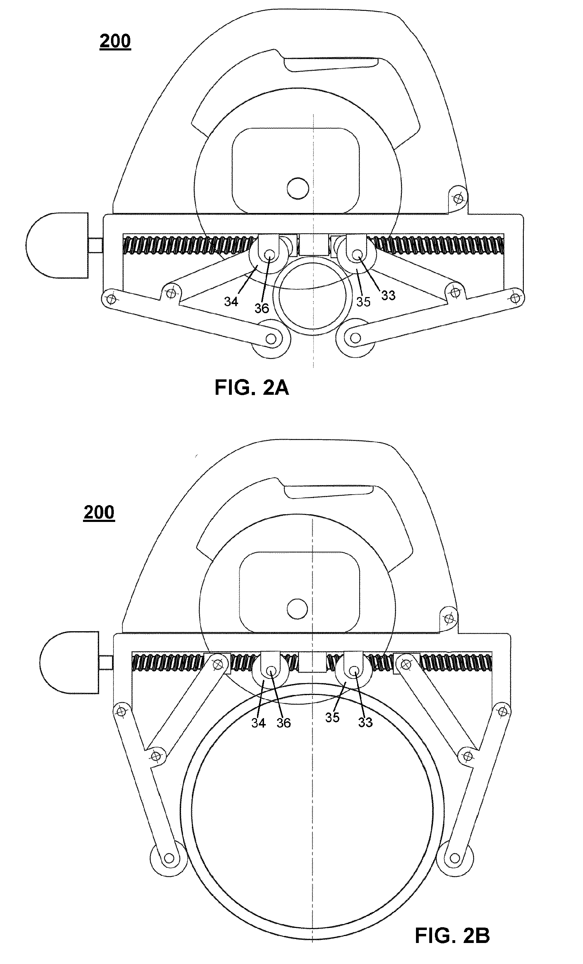

Figures 1A-1C and 2A-2B illustrate example embodiment of an apparatus 100, 200 according to an advantageous embodiment of the invention for working tubular or round-bar type pieces, such as for cutting a pipe 1. A tool unit 3 of the apparatus comprises advantageously a machining blade 13, such as a circular saw. In the examples the apparatus is designed as a hand tool.

The apparatus comprises a clamping mechanism 2, which is adapted to be fastened or grip to the pipe 1 to be machined rotatably therearound. Rotation occurs in such a way that the apparatus essentially retains its position in the axial direction of the pipe. The clamping mechanism or apparatus comprises advantageously wheels 15, 16, 35, 36 (or any other similarly functioning supporting means, like a slide), which are advantageously mounted with bearings in such a way that, when pressed against the pipe's 1 external surface, the clamping mechanism 2 can be rotated in a plane essentially perpendicular to the centre axis of the pipe 1 or, respectively, the pipe 1 can be rotated relative to the clamping mechanism 2.

The clamping mechanism 2 is fitted with a tool unit 3, which in the illustrated example comprises a circular saw pivotably mounted by way of an axle 4 to the clamping mechanism 2 for displacing the saw 3 relative to the clamping mechanism 2 towards or away from the pipe 1 (an arrow A, Fig. 1A, 1B). The saw 3 has its blade 13 adapted to operate from outside a common rolling path of the wheels 15, 16, 35, 36. The axle 4 is advantageously parallel to the axis of rotation 30 of the blade.

The clamping mechanism 2 includes a frame element 5, and first and second arms 6, 7 extending therefrom, said arms being articulated at one end thereof to the frame element 5 of the clamping mechanism 2 and the free end of each arm 6, 7. The arms 6, 7 are according to an embodiment fitted with a bearing axle 31, 32, on which is mounted at least one bearing wheel 15, 16.

In addition according to an embodiment, the apparatus comprises two second bearing axles 33, 34, each of said axles being provided with at least one bearing wheel 35, 36. It is to be noted that the second bearing axles 33, 34 might be fitted adjustably (as is the case with Figures 1A-1C) so that their mutual distance between the arms 6, 7 and the frame element 5 can be changed, or alternatively according to an embodiment they are fixedly fitted to the frame element 5 (as is the case with Figures 2A-2B). According to an embodiment each of said second bearing axles 33, 34 (when adjustable) is connected to one of the threaded shaft's 20 nuts 21, 22. Advantageously the second bearing axles 33, 34 are arranged so that the working force developed by the tool unit's 3 blade 13 applies to the workpiece 1 a force, in response to which the workpiece 1 presses against the bearing wheels 35, 36 mounted on said second bearing axles 33, 34. Said second bearing axles 33, 34 may be adapted to be adjusted by means of a threaded shaft 20. According to an embodiment said second bearing axles 33, 34 may be adapted to be adjusted concurrently with the bearing axles 31, 32 present at the ends of the arms 6, 7.

The clamping mechanism 2 has its frame element 5 fitted rotatably and axially immovably with the threaded shaft 20. The threaded shaft 20 has its first end provided with a right-handed thread for a first nut 21 and its second end with a left-handed thread for a second nut 22. The threaded shaft 20 is provided with a member 23, in the illustrated example with a turning knob, for rotating the threaded shaft 20.

For speeding up an opening and closing action effected by means of the turning knob 23, the threaded shaft may have in its end a gear system with specific gear ratios for a high-speed movement and an actual engagement.

According to an example the first arm 6 and the first nut 21 are articulated to each other by means of a first suspension arm 24. Respectively, the second arm 7 and the second nut 22 are articulated to each other by means of a second suspension arm 25. According to an example the second bearing axles 33, 34 are coupled with said suspension arms 24, 25.

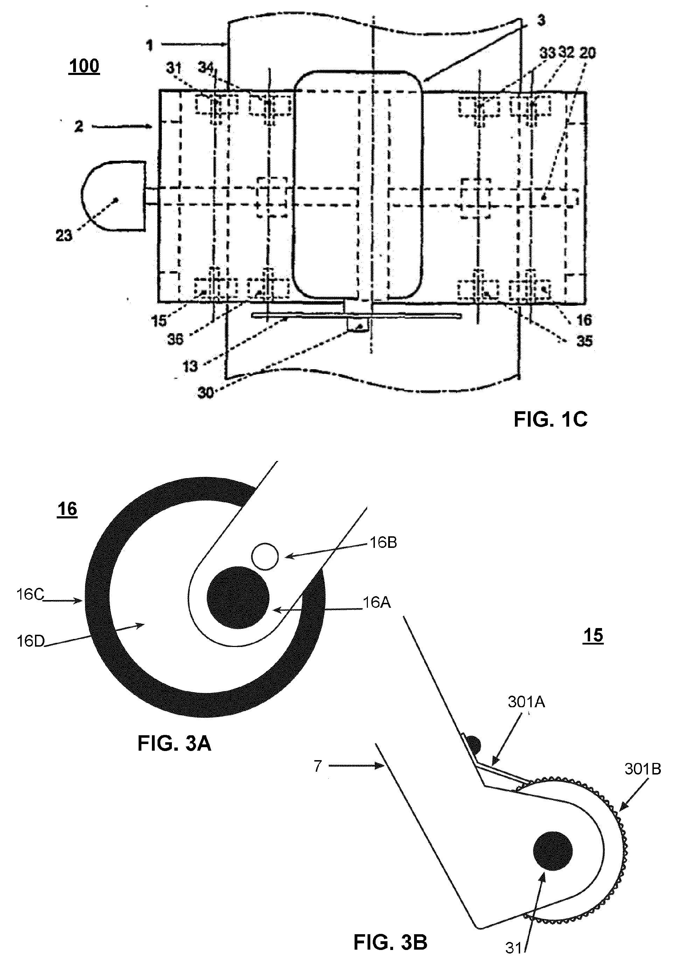

Pivot axles 26, 27 between the arms 6, 7 and the clamping mechanism's 2 frame element 5 are parallel to the bearing axles 31, 32, 33, 34. Each bearing axle 31, 32, 33, 34 may carry one or more wheels 15, 16, 35, 36. In the illustrated example, the wheels 15, 16, 35, 36 are arranged pairwise, as depicted in Fig. 1C.

According to an embodiment at least one 15 of the bearing wheels 15, 16, 35, 36 mounted on the bearing axles 31, 32, 33, 34 may be adapted to rotate in one direction only, by means of a per se known ratchet device (having a tongue member 301A and a corresponding gearing 301 B), as is illustrated in Figure 3B. This enables a relative rotation of the apparatus and the workpiece 1 in one direction only. Thus, such a wheel enables preventing incorrect operation of the apparatus and deformation possibly caused by adverse cutting forces resulting therefrom and irregularities in the cut surface caused thereby.

In addition at least one 16 of the bearing wheels 15, 16, 35, 36 may be mounted via an axis 16A on the apparatus in an eccentrically adjustable way (as is depicted in Figure 3A) so that the track of the apparatus when travelling along the surface of the workpiece to be machined is adjustable. The eccentrically adjustable bearing wheel 16 has an outer surface 16C arranged to rotate around a member 16D, which is mounted via the axis 16A. The member 16D can be locked in different positions by a locking member 16B. By this one can ensure good quality and direct sawing and seam.

Still according to an embodiment at least one of the bearing wheels 15, 16, 35, 36 is configured to increase friction of the bearing wheel 15, 16, 35, 36 in the axial direction of the workpiece to be machined and thereby preventing sliding of the wheels and whole apparatus in relative to the workpiece. As an example the width of the wheel can be extended and is advantageously at least 2 cm. Furthermore the material of bearing wheel is advantageously chosen so to increase the friction and is for example urethane or rubber.

The inventive apparatus operates as follows. The clamping mechanism 2, along with its saw 3, is laid on top of the pipe 1 at a desired cutting point and the clamping mechanism 2 is fastened thereon by means of the turning knob 23. Rotation of the turning knob 23 causes the nut 21 present in the right-handed section of the threaded shaft 20 and the nut 22 present in its left-banded section to move either towards or away from each other, depending on the turning direction. Transmitted by the suspension arms 24, 25 and the arms 6, 7, the motion progresses also to the wheels 15, 16, 35, 36, which respectively move either closer to or further away from each other. By rotating the turning knob 23, the wheels 15, 16, 35, 36 can thus be brought to press at a desired force against the pipe's 1 external surface.

Once the clamping mechanism 2 has been fastened to the pipe 1, the saw 3 can be pivoted towards the pipe 1 relative to the axle 4 included in the frame element 5 of the clamping mechanism 2, whereby the saw's 3 blade penetrates through the pipe's 1 wall to its bottom position, and which is adjustable in a per se known manner. This is followed by circling the clamping mechanism 2, along with its saw 3, around the pipe 1 or, as generally considered more beneficial, the pipe 1 is rotated with the saw 3 remaining stationary until the pipe 1 breaks off.

Advantageously the tool unit 3 is arranged in relation to the frame element 5 so that in the machining conditions (i.e. at the moment when the blade is penetrating into the workpiece) the pressing force vector induced via a handgrip of said tool unit 3 intersects an area formed between the first bearing wheel pair 15, 16 or between the second bearing wheel pair 35, 36, most advantageously points towards a midpoint of said tubular or round-bar type piece to be machined. By this any distortion forces can be minimized and additionally usability and ergonomics can be increase.

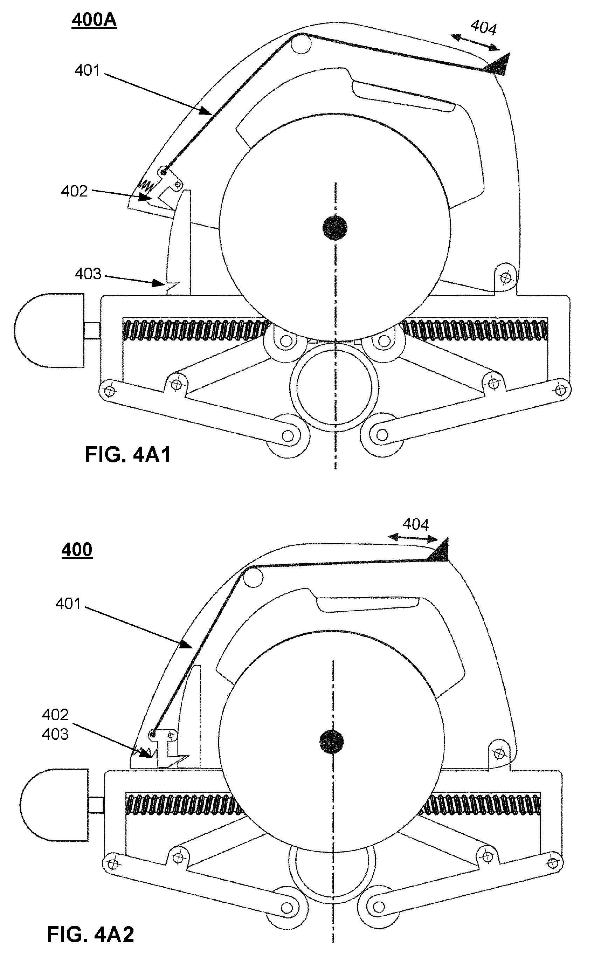

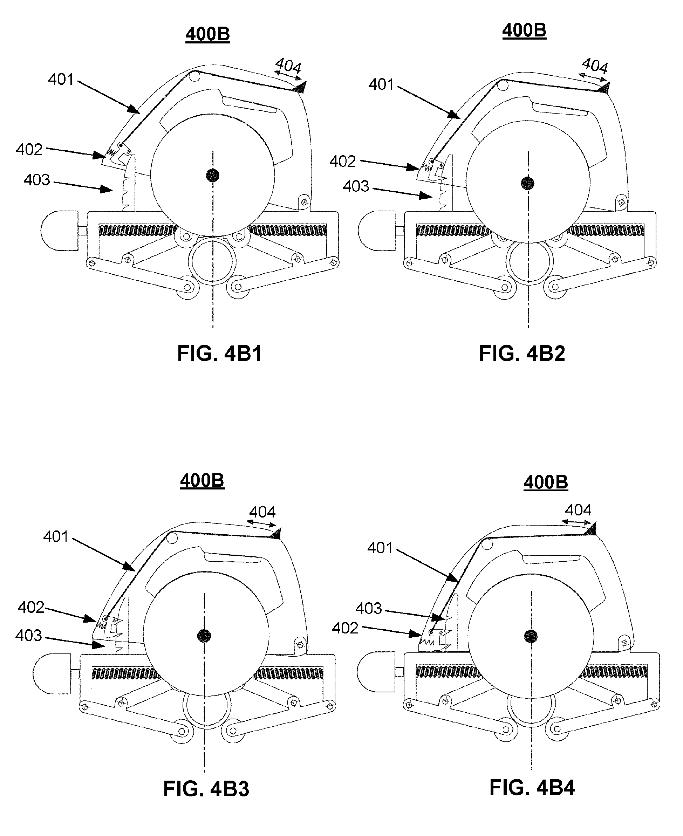

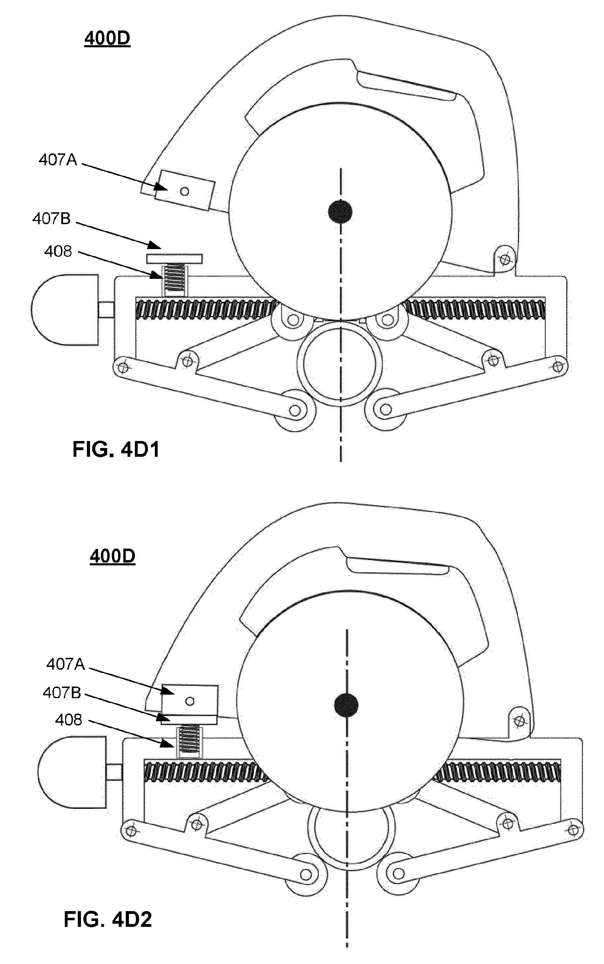

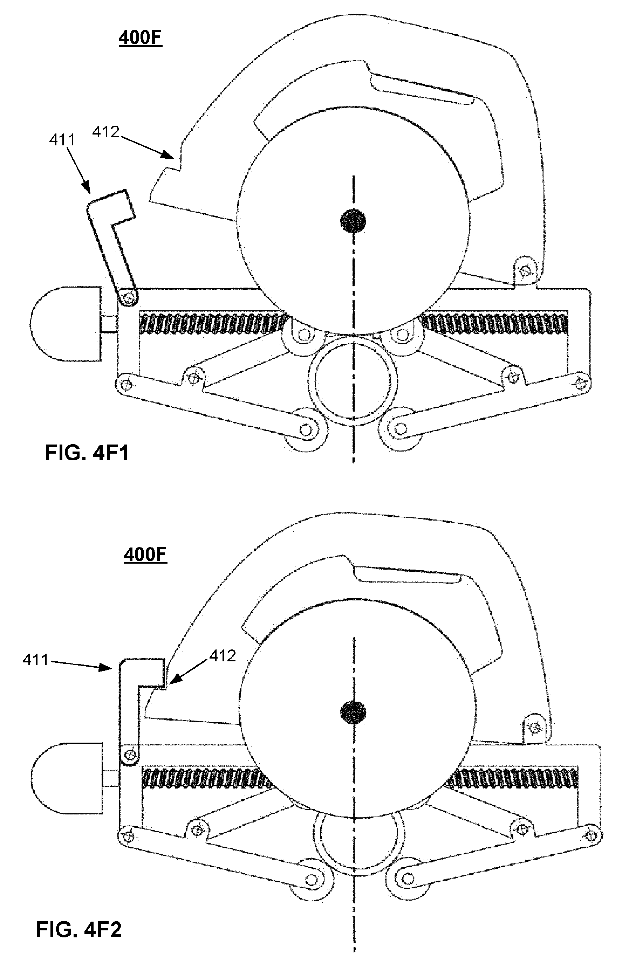

Figures 4A1-4F2 illustrate an example of a locking means 400A-400F of the apparatus according to an advantageous embodiment of the invention. In the first embodiment the locking means 400A is implemented by a hook 402 and corresponding notch 403 to which said hook is configured to be locked when the tool unit 3 is pressed at the machining position (Fig. 4B). The apparatus 100, 200, is configured to be locked in the manipulating position in a releasable manner, where the releasing is implemented by a releasing means 401, 404 so when actuated, it releases the hook 402 from the notch 403. It is to be noted that this is only an example and the locking function can be implemented also other ways. For example the apparatus may comprise a locking means 400B with number of the notches 403, whereupon the tool unit 3 may be locked in different manipulating positions, as is illustrated in Figures 4B1-4B4. This allows adjusting e.g. the cutting depth or machining angle of the blade used for cutting and thereby enabling longer lifetime for the blade, as well as good quality of the cutting surface.

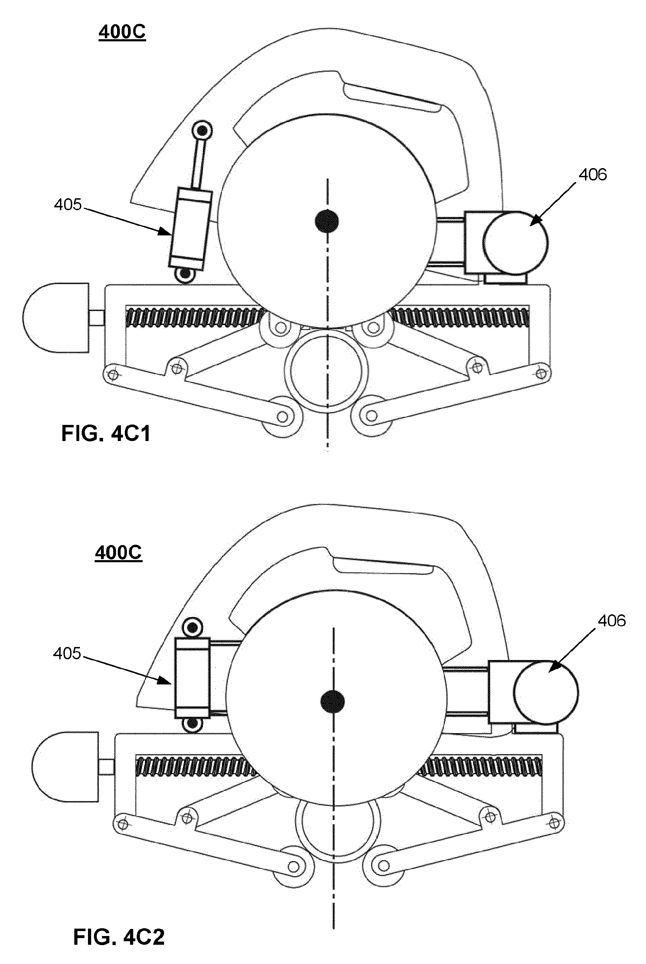

According to an embodiment the locking means 400C may be implemented by a hydraulic or pneumatic cylinder 405 (having advantageously an operating hydraulic or pneumatic pump 406), whereupon the manipulating position of the tool unit, such as a cutting depth, can be adjusted very accurately and in practice continuously, as is illustrated in Figures 4C1-4C2.

According to an embodiment the locking means 400D may be implemented by using electromagnets 407A, 407B as a locking means. The electromagnetic locking means may have own operating switch or alternatively the controlling of the function of the electromagnetic locking means is coupled with the main switch of the apparatus. The apparatus may comprise also an adjusting means for setting a limit or manipulating position, such as cutting or machining depth, beforehand. One example of the adjusting means is a mechanical blocking member or a screw 408, whereupon the manipulating position of the tool unit can be adjusted by turning the screw.

It is to be noticed that the embodiments described in connection with Figures 4A1-4D2 enable the operation of the apparatus 100, 200 by one hand only, if needed. This is clear advantage namely the user does not need to use both hand when operating, such as locking or releasing the locking of the apparatus, which again makes the operation of the apparatus easy and safe.

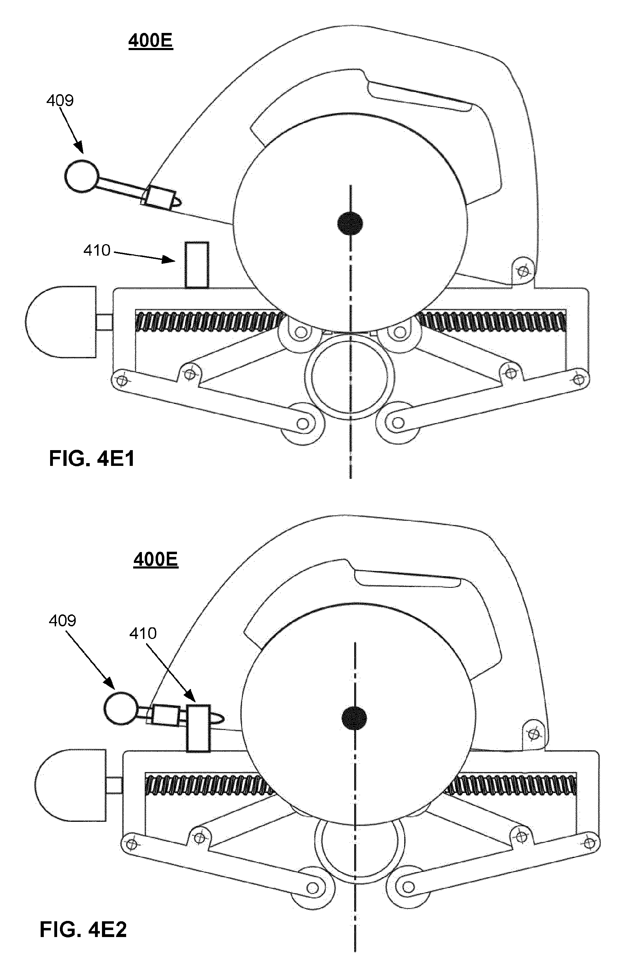

As an example the locking may also be implemented by embodiments described in Figures 4E1-4F2. According to an embodiment the locking means 400E may be implemented mechanically by a pivot member 409, such as a pin or tap or elongated like member and a corresponding hole 410 as its counterpart, which is configured to lock the tool unit in a certain manipulating position when the pivot member is at least partially inserted into its counterpart 410. In addition, the locking means 400F may be implemented mechanically by a latch member 411 and a corresponding notch portion 412 being a counterpart for the latch, which is configured to lock the tool unit in a certain manipulating position when the latch member 411 is moved or turned into its counterpart 412.

It is to be noticed that both of the apparatus 100, 200 can be provided with any locking means described in this document.

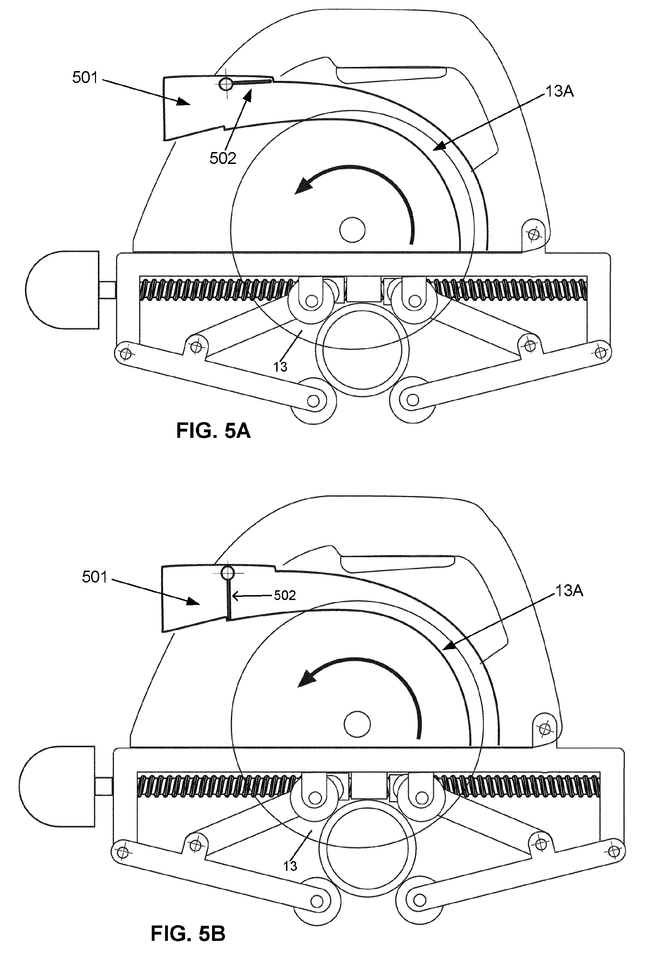

Figures 5A-5B illustrate an example of a sawdust managing means 501 of the apparatus according to an advantageous embodiment of the invention, where the sawdust managing means 501 is implemented by a conduit 501 for removing and guiding sawdust (cuttings) produced by a blade 13 of the apparatus during the machining. The section 13A of the blade 13 is advantageously arranged to rotate in the portion of said conduit and thereby guiding the sawdust into and from the conduit. The apparatus may also comprise an opening and closing means 502 in the connection with the conduit 501 to open and close the conduit and thereby controlling the output of the sawdust from said conduit.

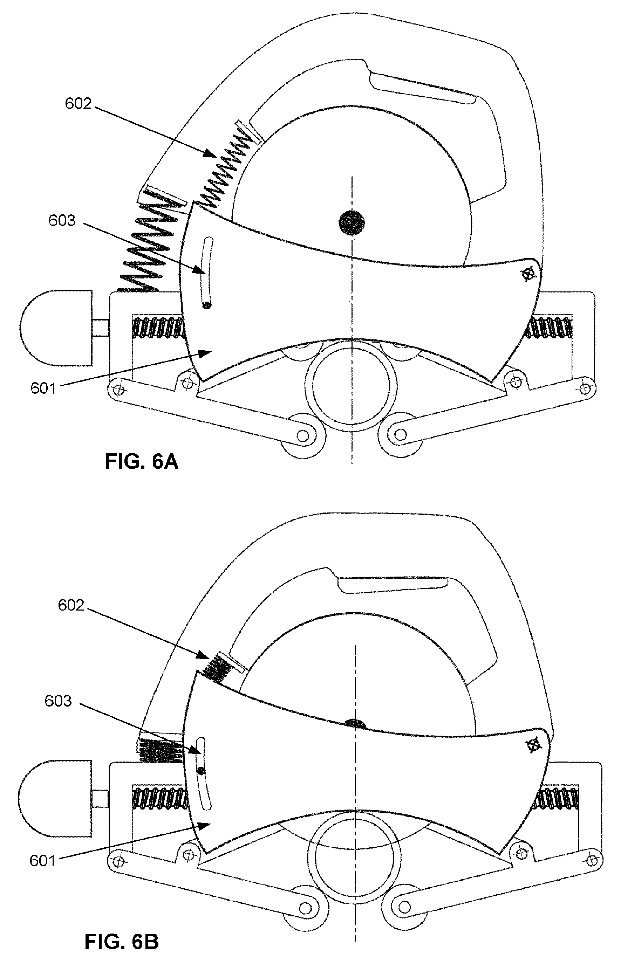

Figures 6A-6B illustrate an example of a protection cover 601 for a blade 13 of an apparatus according to an advantageous embodiment of the invention. The protection cover 601 is for example a lockable protection means (cover) 601 in the bottom portion of the tool unit so that the locking function is configured to be released for a machining operation. Additionally the protection cover 601 is configured to be pressed 602 against the workpiece during the machining (see. Fig 5B) so that the protection cover 601 slides 603 in relation to the tool unit when pressed against the workpiece. According to an example a spring 602 or the like causes a pressing force, which kept the protection cover 601 against the workpiece during machining. In addition a slide 603 is configured to guide the movement of the protection cover 601 during pressing.

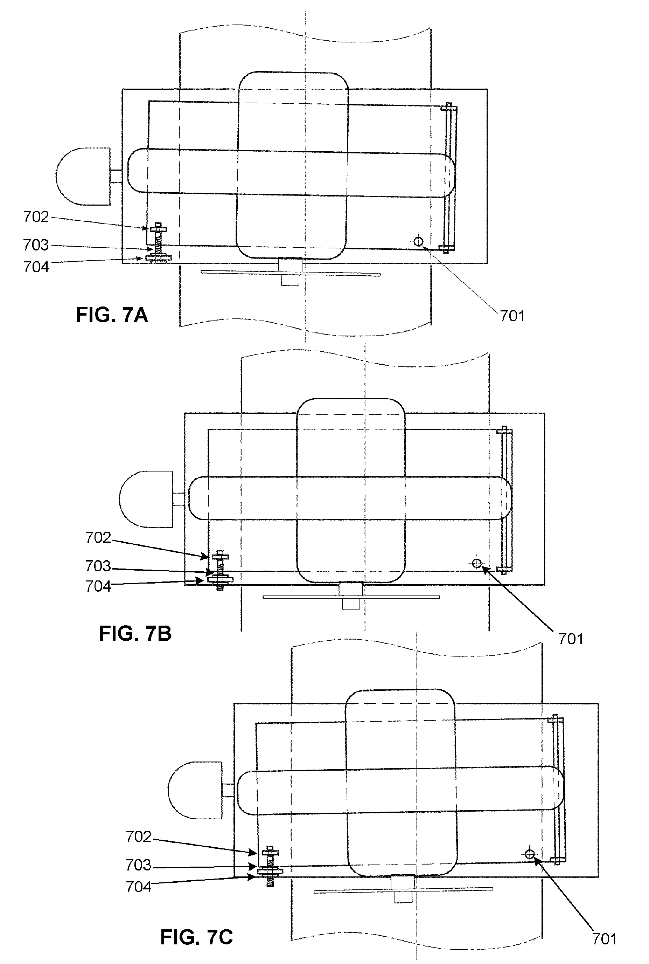

Figures 7A-7C illustrate an example of adjusting means 701, 702, 703, 704 for adjusting the tool 3 unit in a lateral direction according to an advantageous embodiment of the invention, where the lateral direction is perpendicular in relation to the displacing movement happening around the adjustment means 4, which is illustrated e.g. Figures 1A and 1B. The lateral adjusting allows controlling and aligning of the travelling direction of the tool unit and the saw or blade or other manipulating means of the tool unit along the workpiece to be manipulated.

As an example the lateral adjusting means 701, 702, 703, 704 comprises a hinge means 701, around which the lateral adjusting happens. In addition the lateral adjusting means comprises a threaded shaft 703 having a finger nut 704 in its first end so that when the finger nut 704 is turned, also the threaded shaft 703 at the same. The finger nut is again coupled with the frame element 5. As an example the frame element 5 may comprise bracket means arranged around the finger nut 704 so that the finger nut does not essentially move in lateral direction in relation to the frame element 5. In addition the threaded shaft 703 is coupled with a coupling means 702 in a fixed manner in its second end. The coupling means 702 is again coupled with a tool unit 3 so that when the finger nut 704 and at the same also the threaded shaft 703 is turned, the coupling means 702 displaces the tool unit 3 around hinge means 701 and thereby moving the tool unit 3 laterally in relation to the frame element 5.

It is to be noted, however, that the lateral adjusting means with devices 701, 702, 703, 704 disclosed in Figures 7A-7C is only an example, and that the lateral adjusting can be naturally implemented also with other suitable devices, such as a stepping motor suitable for moving the moving the tool unit 3 with the manipulating means laterally in relation to the frame element, or hook and corresponding notch or number of the notches, hydraulic or pneumatic cylinder, a pivot member, such as a pin or tap or elongated like member and a corresponding hole or holes as its counterpart, or a latch member and a corresponding notch portion or portions being a counterpart for the latch, as an example.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims. Especially it is to be noted that the apparatus is suitable for manipulating, such as especially machining, cutting, bevelling, grooving, welding or otherwise manipulating the tubular and round-bar type pieces. In addition it is to be noted that the tool unit can also be mounted by the axle 4 to the clamping mechanism 2 in the other end of the apparatus, whereupon the path of the hand when pressing the apparatus might be advantageous in certain embodiment.

## Claims

1. An apparatus (100) for manipulating, such as machining, and especially cutting tubular and round-bar type pieces (1), said apparatus comprising a clamping mechanism (2) adapted to be fastened to said workpiece (1) rotatably therearound and said clamping mechanism (2) having attached thereto a tool unit (3), which is provided with adjustment means (4) for displacing said tool unit (3) relative to the clamping mechanism (2) towards or away from the workpiece (1), and said clamping mechanism (2) including a frame element (5) and first and second arms (6, 7) extending therefrom, said arms (6, 7) being articulated at one end to the frame element (5) of the clamping mechanism (2) and each arm (6, 7) has its free end fitted with a bearing axle (31, 32), which is provided with at least one bearing wheel (15, 16), the clamping mechanism (2) having its frame element (5) provided in a rotatable and axially immobile fashion with a threaded shaft (20), whose first end has a right-handed thread provided with a first nut (21) and whose second end has a left-handed thread provided with a second nut (22), and said threaded shaft (20) being provided with a member (23) for rotating the threaded shaft (20), and the first arm (6) and the first nut (21) being articulated to each other by means of a first suspension arm (24) and the second arm (7) and the second nut (22) being articulated to each other by means of a second suspension arm (25), wherein the apparatus (100) is configured to be locked (400A-404D) in the manipulating position in a releasable manner.

2. An apparatus of claim 1, wherein the locking (400A, 400B, 400C, 400D) is implemented
- mechanically by a hook (402) and at least one notch (403) being counterpart for the hook and configured to lock the tool unit in a certain manipulating position,
- electrically by an electromagnet (407A) and its counterpart (407B), which are configured to lock the tool unit in a certain manipulating position,
- by a hydraulic or pneumatic cylinder (405), which is configured to lock the tool unit in a certain manipulating position, or
- by a latch member (411) and a notch (412) being a counterpart for the latch, which is configured to lock the tool unit in a certain manipulating position.

3. An apparatus of any of previous claims, wherein the apparatus further comprises two second bearing axles (33, 34), each of said axles being provided with at least one bearing wheel (35, 36), wherein said two second bearing axles (33, 34) are either:
- fitted adjustably (100) relative to their mutual distance between the arms (6,7) and the frame element (5), or
- fitted fixedly (200) to the frame element (5).

4. An apparatus of claim 3, wherein said second bearing axles (33, 34) are fitted between the arms (6, 7) adjacent to the frame element (5), such that the working force produced by a blade (13) of the tool unit (3) applies to the workpiece (1) a force, in response to which the workpiece presses against the bearing wheels (35, 36) mounted on said second bearing axles (33, 34).

5. An apparatus of any of claims 3-4, wherein said second bearing axles (33, 34) are adapted to be adjusted by means of the threaded shaft (20) concurrently with the bearing axles (31, 32) present at the ends of the arms (6,7).

6. An apparatus of any of claims 3-5, wherein each of said second bearing axles (33, 34) is connected to one of the nuts (21, 22) of the threaded shaft (20), and wherein each of said second bearing axles (33, 34) is connected to one of the arms (6, 7).

7. An apparatus of any of claims 3-6, wherein at least one (15) of the bearing wheels (15, 16, 35, 36) mounted on the bearing axles (31, 32, 33, 34) is adapted to rotate in one direction only.

8. An apparatus of any of previous claims, wherein width of at least one (15) of the bearing wheels (15, 16, 35, 36) is at least 2 cm and/or wherein the material of the bearing wheel is urethane or rubber so to increase friction of the bearing wheels (15, 16, 35, 36) in the axial direction of the workpiece to be machined.

9. An apparatus of any of previous claims, wherein at least one (16) of the bearing wheels (15, 16, 35, 36) is mounted on the apparatus in an eccentrically adjustable way (16A, 16B) so that the track of the apparatus when travelling along the surface of the workpiece to be machined is adjustable.

10. An apparatus of any of previous claims, wherein the apparatus comprises a lockable protection means (601) in the bottom portion of the tool unit so that the locking function is configured to be released for the machining operation and that the protection means is configured to be pressed (602) against the workpiece in a sliding manner during the machining.

11. An apparatus of any of previous claims, wherein the tool unit (3) is arranged in relation to the frame element (5) so that in the machining conditions the pressing force vector induced via a handgrip of said tool unit (3) intersects an area formed between the first bearing wheel pair (15, 16) or between the second bearing wheel pair (35, 36), most advantageously points towards a midpoint of said tubular or round-bar type piece to be machined.

12. An apparatus of any of previous claims, wherein the apparatus comprises a conduit (501) for removing sawdust produced by a blade (13) of the apparatus during the machining, where a section (13A) of the blade (13) is arranged to rotate in the portion of said conduit (501) and thereby guiding the sawdust into and from the conduit, and wherein the apparatus comprises opening and closing means (502) in the connection with said conduit (501) to open and close the conduit and thereby controlling the output of the sawdust from said conduit..

13. An apparatus of any of previous claims, wherein the tool unit (3) comprises a circular saw, a bandsaw, a piercing saw or a bevelling saw.

14. An apparatus of any of previous claims, wherein the apparatus comprises lateral adjusting means (701, 702, 703, 704) for adjusting said tool unit (3) laterally and perpendicularly relative to said displacing movement happening towards or away from the workpiece (1), and thereby adjusting direction of travelling of the tool unit along the workpiece (1) to be manipulated.

15. An apparatus of claim 14, wherein the lateral adjusting means (701, 702, 703, 704) comprises a hinge means (701) and a threaded shaft (703), where the threaded shaft (703) comprises a finger nut (704) coupled with the frame element (5), and the threaded shaft (703) is coupled with a coupling means (702) in a fixed manner, which is coupled with a tool unit (3), whereupon the tool unit (3) is configured to be adjusted around hinge means (701) and thereby the threaded shaft (702) is turned and thereby laterally moving the tool unit (3) relation to the frame element (5), when the finger nut (704) is turned.
